# EUROPEAN PATENT APPLICATION

(11) **EP 2 629 515 A1**
(43) Date of publication of application: **21.08.2013**
(21) Application number: 13164532.7
(22) Date of filing: 03.11.2004
(51) Int. Cl.: H04N 7/173, H04H 60/91, H04H 20/91, H04M 1/725, H04N 21/235, H04N 21/262, H04N 21/414, H04N 21/426, H04N 21/434, H04N 21/435, H04N 21/443, H04N 21/81, H04N 21/458

(54) **Apparatus and method for receiving data broadcasting service to support connection with mobile networks**

(30) Priority: 04.11.2003 KR 20030077604
(62) Divisional of application: 04800008.7
(71) Applicant: Electronics and Telecommunications Research Institute, Daejon-si 305-350 (KR)
(72) Inventor: Kim, Sung-Hoon, 302-726 Daejon (KR); Bang, Gun, 305-804 Daejon (KR); Kim, Seung-Won, Fairfax, VA Virginia 22032 (US); Choi, Jin-Soo, 305-308 Daejon (KR); Lee, Soo-In, 302-120 Daejon (KR); Kim, Jin-Woong, 305-761 Daejon (KR)
(74) Representative: Betten & Resch

(57) **Abstract**

Provided are a data broadcast receiving apparatus that can be easily connected with mobile communication terminals of diverse access specifications by easily upgrading middleware or plug-in software in digital broadcast mobile and fixed receiving environments, and a method thereof. The data broadcast receiving apparatus includes a demultiplexer for separating signals transmitted from the outside into signals of a kind; a controller for controlling elements of the data broadcast receiving apparatus, receiving and outputting contents separated in the demultiplexer; a download processor for receiving downloadable data divided in the demultiplexer, determining the kind of the downloadable data, and performing upgrade by downloading the downloadable data; and a mobile terminal accessing unit for accessing to a mobile communication network based on the downloadable data.

## Description

### Disclosure

### Technical Field

The present invention relates to a data broadcasting receiving apparatus supporting a function of accessing to a mobile communication network and a method thereof; and, more particularly, to an apparatus for downloading upgrade software by being connected to a mobile communication network in digital broadcasting mobile and fixed reception environments and providing an interactive service by using the upgrade software, and a method thereof.

### Background Art

In the age of digital broadcasting, diverse specifications are used according to regions and media such as terrestrial waves, satellite and cable. Digital broadcasting receivers and mobile terminals connected to a mobile communication network, too, have interface with an external device based on diverse access specifications according to regions and providers.

The interface specification is expected to be developed further, as it accommodates new technology to satisfy the convenience and demand of the service providers.

For example, the portable digital terminals provided by each mobile communication terminal manufacturers and laptop computers have different interface specifications. In order to connect the terminals or the laptop computers with an external device, different matching specifications and connection protocols should be used.

However, it takes long time for a digital broadcasting receiving apparatus to be widespread. Therefore, if a user should purchase digital broadcasting receiving apparatus whenever a new matching specification with the mobile communication terminal is introduced, it will bring economical burden to users as well as delaying the service introduction time and thus dropping business feasibility.

To overcome the problem, required is a digital broadcasting receiving apparatus that can be upgraded by downloading software to be added to provide a new service through a broadcasting network or a communication network.

The data broadcasting receiving apparatus having a software downloadable structure is favorable for the introduction of a new service. Also, it can be applied to diverse media and regions with the same platform.

Therefore, the users do not need to purchase the broadcasting receiver according to the communication service providers and the kind of the mobile communication terminal and thus they can save the burden of additional purchase. The service providers also can improve the business performance by providing a new service based on the large-volume data broadcasting equipment.

Therefore, a new receiving apparatus and method that can upgrade the access function of diverse mobile communication terminals by upgrading the access and protocols through the broadcasting network and the communication network are required necessarily.

### Disclosure

### Technical Problem

It is, therefore, an object of the present invention to provide a data broadcasting receiving apparatus that can be connected with mobile communication terminals of diverse connection specifications by upgrading middleware or a plug-in software conveniently in a digital broadcasting mobile and fixed reception, and a method thereof.

The other objects and advantages of the present invention can be easily understood by those skilled in the art.

### Technical Solution

In accordance with one aspect of the present invention, there is provided a data broadcast receiving apparatus capable of supporting an interactive service, which includes: a demultiplexer for separating signals transmitted from the outside into signals of a kind; a controller for controlling elements of the data broadcast receiving apparatus, receiving and outputting contents separated in the demultiplexer; a download processor for receiving downloadable data divided in the demultiplexer, determining the kind of the downloadable data, and performing upgrade by downloading the downloadable data; and a mobile terminal accessing unit for accessing to a mobile communication network based on the downloadable data.

In accordance with one aspect of the present invention, there is provided a data broadcast receiving apparatus supporting an interactive service, which includes: a demultiplexer for dividing signals from the outside into signals of a kind; a controller for controlling elements of the data broadcast receiving apparatus, receiving and outputting contents divided in the demultiplexer; a download processor for receiving downloadable data divided in the demultiplexer, determining the kind of the downloadable data, and performing upgrade by downloading the downloadable data; and a mobile terminal accessing unit for accessing to a mobile communication network based on the downloadable data.

In accordance with one aspect of the present invention, there is provided a method for upgrading software by using downloaded data inputted from the outside in a data broadcast receiving apparatus, which includes the steps of: a) selecting downloadable data from broadcast stream in the data broadcast receiving apparatus; b) determining the kind of the downloadable data; and c) upgrading the software according to the kind of the downloadable data.

In addition, the method for upgrading the software in the data broadcasting receiving apparatus based on the data downloaded from the outside further includes a step of connecting the mobile terminal, in which the mobile communication network connection request is received from the user and processed.

### Advantageous Effect

A data broadcasting receiving apparatus of the present invention can upgrade middleware or plug-in software easily in digital broadcasting mobile and fixed reception environments and thereby it can be easily connected with a mobile communication terminal that is changed continuously.

Also, the present invention provides the following economical advantages on the parts of users, broadcasting stations, and receiving apparatus manufacturers.

First, the users can save the cost for purchasing and maintaining equipment by removing an additional cost for frequent upgrade of the receiving apparatus in the long run.

Secondly, the broadcasting station can increase the broadcasting quality through application upgrades, as the receiving apparatus supports software upgrade and provides diverse data broadcasting services. Thus, the broadcasting station can shorten the time for propagating the receiving apparatus that supports the software upgrade.

Thirdly, since the software upgrade for the receiving apparatus is supported on the network, the receiving apparatus manufacturers can save the human and material resources needed for maintaining and repairing the receiving apparatuses.

### Brief Description of Drawings

The above and other objects and features of the present invention will become apparent from the following description of the preferred embodiments given in conjunction with the accompanying drawings, in which:
Fig. 1 is a block diagram illustrating a data broadcasting receiving apparatus supporting an access to a mobile communication network in accordance with an embodiment of the present invention; and
Fig. 2 is a block diagram illustrating a processor and an interaction between the processor and a mobile terminal accessing unit 29 in accordance with an embodiment of the present invention.

### Best Mode for the Invention

Other objects and aspects of the invention will become apparent from the following description of the embodiments with reference to the accompanying drawings, which is set forth hereinafter.

The following description provides an example of the principle of the present invention. Thus, those skilled in the art can realize the principle of the present invention and invent diverse apparatuses in the concept and scope of the present invention, although they are not described definitely or illustrated. Also, the conditional terms and embodiments presented in the present patent specification are definitely intended only for the purpose of understanding and the present invention is understood not limited to the embodiments and the conditions described in the specification.

In addition, all detailed descriptions of a particular embodiment as well as the principle, viewpoints and embodiments of the invention should be understood to include their structural and functional equivalents. The equivalents are understood to include not only currently known equivalents and equivalents to be invented in future, that is, all devices invented to perform the same functions, regardless of the structures.

Therefore, the block diagrams of the present invention should be understood to present a conceptual viewpoint of an exemplary circuit materializing the principle of the present invention. Similarly, flowcharts, state diagrams, and pseudo codes can be substantially expressed in a computer-readable recording medium, and they should be understood to show diverse processes performed by a computer or a processor, whether or not a computer or a processor is illustrated clearly.

The functions of diverse devices illustrated to include a processor or a functional block similar to a processor can be provided as dedicated hardware or hardware capable of executing proper software. When the functions are provided by a processor, the functions can be provided by a single dedicated processor, a single shared processor or a plurality of individual processors and part of them can be shared.

The clear use of a term presented as a processor, control, or a similar concept should not be construed to refer to exclusively hardware capable of performing software and it should be understood to implicatively include a digital signal processor (DSP) hardware and Read Only Memory (ROM), Random Access Memory (RAM) and nonvolatile memory for storing software without any limitation. Other known and widely used hardware can be included.

In the claims of the present specification, an element expressed as a means for performing a function described in the detailed description is intended to include all methods for performing the function including all formats of software, such as combinations of circuits for performing the intended function, firmware/microcode and the like.

To perform the intended function, the element is cooperated with a proper circuit for performing the software. The present invention defined by claims includes diverse means for performing particular functions, and the means are connected with each other in a method requested in the claims. Therefore, any means that can provide the function should be understood to be an equivalent to what is figured out from the present specification.

Other objects and aspects of the invention will become apparent from the following description of the embodiments with reference to the accompanying drawings, which is set forth hereinafter. The same reference numeral is given to the same element, although the element appears in different drawings. In addition, if further detailed description on the related prior arts is determined to blur the point of the present invention, the description is omitted. Hereafter, preferred embodiments of the present invention will be described in detail with reference to the drawings.

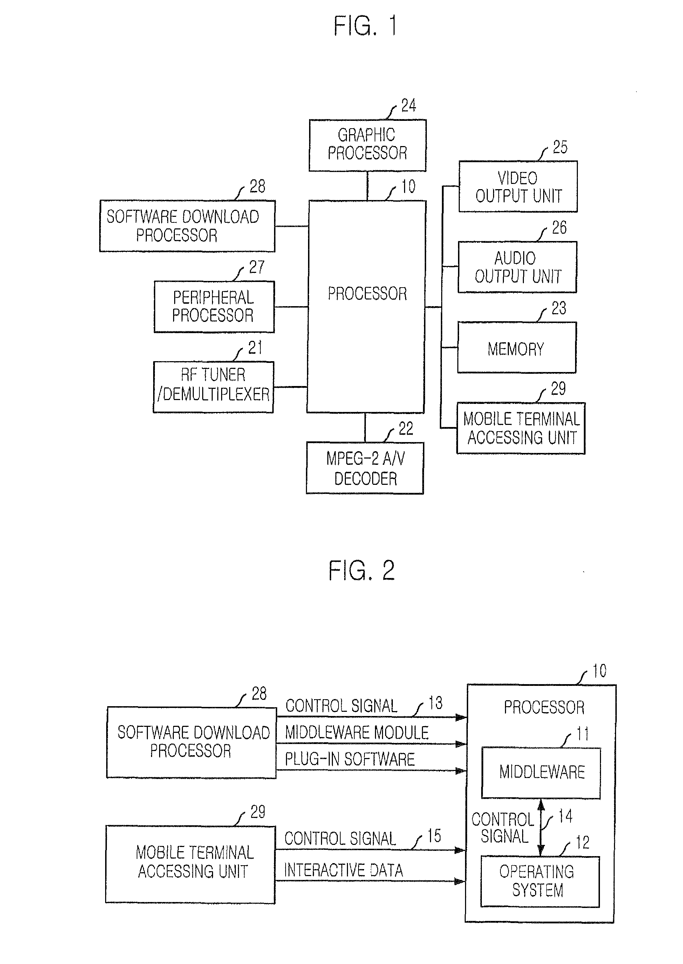

Fig. 1 is a block diagram illustrating a data broadcasting receiving apparatus supporting an access to a mobile communication network in accordance with an embodiment of the present invention.

As illustrated in Fig. 1, the data broadcasting receiving apparatus of the present invention includes: a processor 10, a radio frequency (RF) tuner/demultiplexer 21, a Moving Picture Experts Group (MPEG)-2 AV decoder 22, a memory 23, a graphic processor 24, a video output unit 25, an audio output unit 26, a peripheral processor 27, a software download processor 28, and a mobile terminal accessing unit 29.

The elements of the data broadcasting receiving apparatus suggested in the present invention are operated as follows.

The RF tuner/demultiplexer 21 receives terrestrial RF signals and classifies the signals into audio, video, contents and download data through modulation and demodulation according to the kind of a signal based on each bit stream.

The processor 10 controls the elements of the data broadcasting receiving apparatus, receives and processes contents classified in the RF tuner/demodulator 21, and outputs them through the graphic processor 24, the audio output unit 26, and the video output unit 25.

The software download processor 28 receives the downloaded data, determines a software module to be upgraded to be connected with the mobile communication terminal, and performs software upgrade.

Herein, the 'upgrade' signifies a process of setting up new software, such as plug-in program, as well as all the processes of setting up software whose version is different from that of the pre-established software.

The MPEG-2 AV decoder 22 receives audio and video classified in the RF tuner/demodulator 21, decodes them based on the MPEG-2 specification, and outputs them through the video output unit 25 and the audio output unit 26, individually.

The mobile terminal accessing unit 29 is cooperated with the software upgraded in the software download processor 28 and accesses to the mobile communication network through the mobile communication terminal.

Fig. 2 is a block diagram illustrating a processor and an interaction between the processor and a mobile terminal accessing unit 29 in accordance with an embodiment of the present invention.

As shown in Fig. 2, the processor 10 of the present invention includes middleware 11 and an operating system 12 and connected with the software download processor 28 and the mobile terminal accessing unit 29.

Herein, the middleware 11 outputs a control signal 13 to the software download processor 28 and it is provided with plug-in software and a middleware module for upgrade, which is stored in the memory 23 for the connection with the mobile communication terminal, from the software download processor 28. The software for connection with the mobile communication terminal can be the middleware module or the plug-in software.

Also, the operating system 12 performs a connection process by exchanging control signals 14 and 15 for connection to the mobile communication network with the middleware 11 and the mobile terminal accessing unit 29, and it transmits/receives interactive data.

The middleware 11 and the operating system 12 of the processor 10, the software download processor 28, and the mobile terminal accessing unit 29 are operated as follows.

When the middleware module is upgraded, the software download processor 28 checks out whether the middleware 11 is in operation based on the control signal 13.

If the middleware 11 is in operation, the resources of the software download processor 28 are suspended, and the operating system resources assigned for the operation of the middleware are suspended by outputting the control signal 14 to the operation system 12 through the middleware 11.

The operating system 12 informs the middleware 11 of the suspension of the operating system resources through the control signal 14 so that the middleware 11 comes to a complete suspension. Subsequently, the middleware 11 informs the software download processor 28 of the suspension through the control signal 13, and the software download processor 28 performs upgrade in the middleware 11 by transmitting the middleware module to the middleware 11.

After the upgrade of the middleware module is completed, the middleware 11 transmits a signal for resuming the operation of the middleware to the software download processor 28 based on the control signal 13 transmitted from the software download processor 28.

Also, in case where the plug-in software is set up for middleware plug-in, the software download processor 28 transmits the middleware plug-in to the middleware 11 regardless of the state of the middleware 11 and sets up the plug-in software in the middleware 11.

Subsequently, the software upgraded to be connected to a mobile communication terminal performs the connection process by exchanging the control signal 15 for connection with the mobile communication network with the mobile terminal accessing unit 29 under the control of the operating system 12.

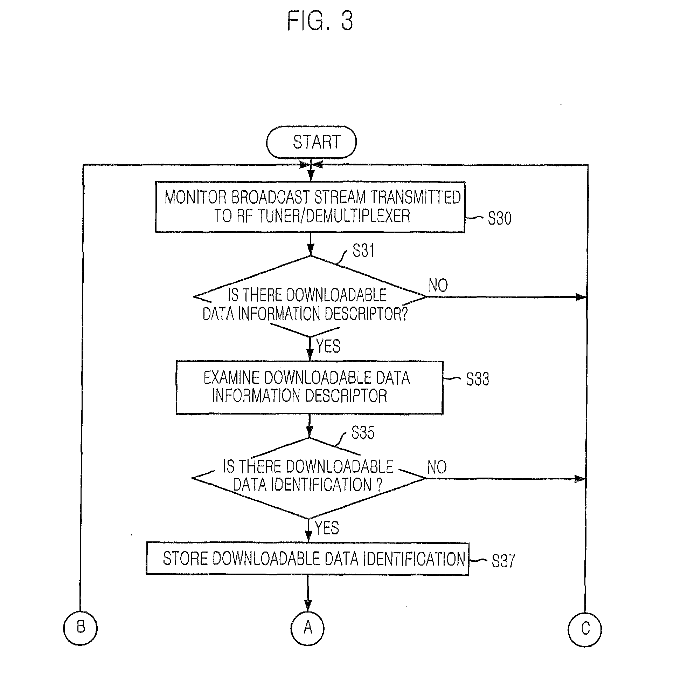

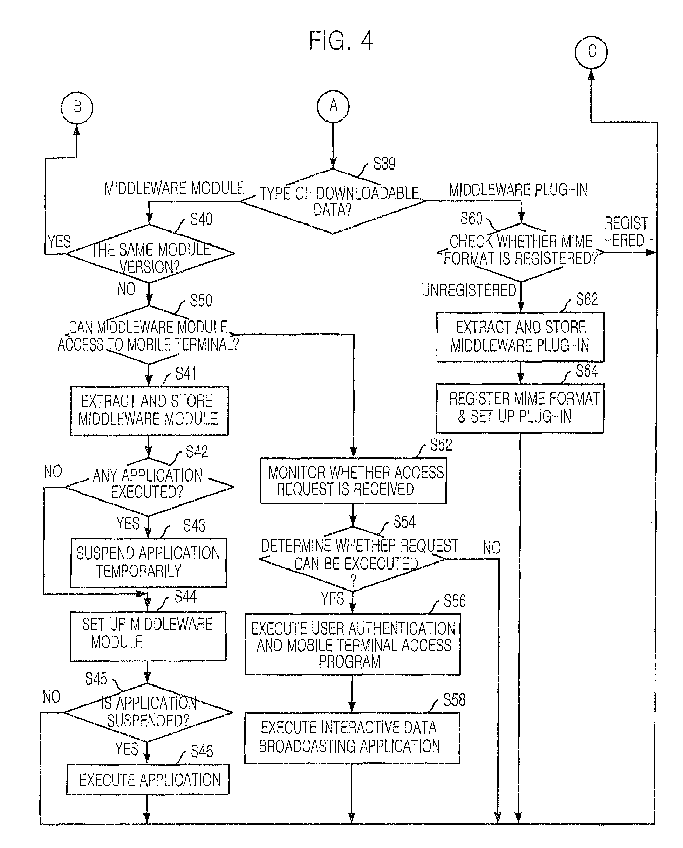

Figs. 3 and 4 are flowcharts describing the software downloading process and the mobile communication network accessing process in accordance with an embodiment of the present invention. The flowcharts describe the operation of the software download processor 28 and the mobile terminal accessing unit 29 in accordance with an embodiment of the present invention. The software download processor 28 downloads and sets up the upgrade software which is transmitted through the broadcasting network, and the mobile terminal accessing unit 29 accesses to the mobile communication network by using the upgrade software.

First, at step S30, the software download processor 28 monitors broadcast stream transmitted to the RF tuner/demultiplexer continuously and, at step S31, it determines whether there is a downloadable data information descriptor.

Herein, the downloadable data information descriptor includes Program Specific Information (PSI) of the MPEG-2 system, Data Service Table (DST) of the Advanced Television Systems Committee (ATSC) data broadcasting, Application Information Table (AIT) of the DVB-Multimedia Home Platform (MHP), and System Information (SI) of the Digital Multimedia Broadcasting (DMB).

If it is determined that there is no downloadable data information descriptor at the step S31, the logic flow goes to the step S30 to continue to monitor the broadcast stream. If there is a downloadable data information descriptor, at step S33, the contents of the downloadable data information is examined.

Subsequently, at step S35, it is determined whether the examined downloadable data information descriptor includes downloadable data identification, which is information for identifying the data format of the downloadable data.

If there is no downloadable data identification at the step S35, the logic flow goes to the step S30 to monitor the broadcast stream. Otherwise, if there is downloadable data identification, at step S37, the downloadable data identification is stored in the memory 23.

Subsequently, at step S39, the kind of the downloadable data is determined based on the above-stored downloadable data identification.

As a result of the step S39, if the downloadable data are middleware module, at step S40, it is determined whether its version is the same as the version of the pre-established middleware module.

If the version of the middleware module to be downloaded is the same as the version of the pre-established middleware module, the download is suspended and the logic flow goes to the step S30 to continue to monitor the broadcast stream. If the versions are not the same, at step S50, it is determined whether the middleware module is capable of accessing to the mobile terminal.

If the middleware module is not capable of accessing to the mobile terminal, at step S41, the middleware module is extracted from the broadcast stream and stored in the memory 23.

Subsequently, at step S42, it is checked whether there is any application executed on the middleware.

If there is no application executed,' at step S44, the middleware module is set up. If there is an application executed, at step S43, the application in execution is suspended and then, at step S44, middleware module is set up.

Subsequently, at step S45, it is checked whether the application is suspended temporarily after the completion of the middleware setup. If the application is suspended temporarily, at step S46, the application is resumed and then the logic flow goes back to the step S30 to continue to monitor the broadcast stream. If the application is not in the state of temporary suspension, the logic flow goes back to the step S30 to continue to monitor the broadcast stream.

Meanwhile, if the middleware is capable of accessing to the mobile communication terminal, at step S52, it is checked whether there is a request for accessing to the mobile communication network from the user.

Then, if there is the request for accessing to the mobile communication network from the user, at step S54, it is checked whether the downloaded software and data can execute the request of the user.

If it is determined that the request from the user cannot be executed at the step S54, the logic flow goes back to the step S30 to continue to monitor the broadcast stream. If the request from the user can be executed, at step S56, user authentication and a mobile terminal accessing program can be executed and, at step S58, the interactive data broadcasting application is executed.

For instance, if the downloaded software has control signals and data that can support only the mobile terminals produced by an A company and the user requests a mobile communication service of a B company, it is determined that the service request cannot be executed and the logic flows jumps back to the starting point 30. If the service request can be executed, at step S56, a user authentication process is performed and a mobile communication network connection process is performed for interactive data communication. If the access to the communication network is successful, at step S58, an application program for interactive data broadcasting is carried out.

Meanwhile, as a result of the step S39, if the kind of the downloadable data is middleware plug-in data, at step S60, it is checked whether the Multipurpose Internet Mail Extensions (MIME) format of the downloadable middleware plug-in data, which is described to inform the type of application data to be used for the plug-in data, is registered or not in comparison with an MIME format list in the receiving apparatus.

If the MIME format is registered in the pre-established list at the step S60, the plug-in process is ended and the logic flow goes back to the step S30 to continue to monitor broadcast stream. If the format is not registered in the pre-established list, that is, if the MIME format is new, at step S62, data for middleware plug-in are extracted from the broadcast stream and stored in the memory 23.

Subsequently, at step S64, plug-in software is set up and it is registered as a new MIME format and the logic flow goes back to the step S30.

The method of the present invention can be embodied as a program and stored in a computer-readable recording medium, such as CD-ROM, RAM, ROM, floppy disks, hard disks, magnetooptical disks and the like. Since the process can be easily implemented by those of ordinary skill in the art, further description on it will not be provided herein.

While the present invention has been described with respect to certain preferred embodiments, it will be apparent to those skilled in the art that various changes and modifications may be made without departing from the scope of the invention as defined in the following claims.

Further exemplary aspects of the invention are described as follows.

Example 1. A data broadcast receiving apparatus capable of supporting an interactive service, comprising:
a demultiplexing means for dividing signals transmitted from the outside into signals of a kind; a controlling means for controlling elements of the data broadcast receiving apparatus, receiving and outputting contents divided in the demultiplexing means; a download processing means for receiving downloadable data divided in the demultiplexing means, determining the kind of the downloadable data, and
performing upgrade by downloading the downloadable data; and
a mobile terminal accessing means for accessing to a mobile communication network based on the downloadable data.

Example 2. The data broadcast receiving apparatus as recited in example 1, wherein the controlling means includes: a middleware processing means for processing middleware of the data broadcast receiving apparatus, controlling the download processing means, receiving a middleware module and a middleware plug-in software included in the downloadable data from the download processing means; and
an operating means for operating the data broadcast receiving apparatus and controlling the middleware processing means and the mobile terminal accessing means.

Example 3. The data broadcast receiving apparatus as recited in example 1, wherein the download processing means determines the kind of the downloadable data by using a downloadable data information descriptor describing data broadcast specification information.

Example 4. The data broadcast receiving apparatus as recited in example 3, wherein the downloadable data information descriptor includes at least one among Program Specific Information (PSI) of the Moving Picture Experts Group (MPEG)-2 system, Data Service Table (DST) of the Advanced Television Systems Committee (ATSC) data broadcasting, Application Information Table (AIT) of the DVB-Multimedia Home Platform (MHP), and System Information (SI) of the Digital Multimedia Broadcasting (DMB).

Example 5. A method for upgrading software by using downloaded data inputted from the outside in a data broadcast receiving apparatus, comprising the steps of: a) selecting downloadable data from broadcast stream in the data broadcast receiving apparatus;
b) determining the kind of the downloadable data ; and
c) upgrading the software according to the kind of the downloadable data.

Example 6. The method as recited in example 5, wherein the step a) includes:
a1) monitoring the presence of a downloadable data information descriptor in the broadcast stream; and
a2) extracting data identification information from the downloadable data information descriptor.

Example 7. The method as recited in example 6, wherein the downloadable data information descriptor includes at least one among Program Specific Information (PSI) of the Moving Picture Experts Group (MPEG)-2 system, Data Service Table (DST) of the Advanced Television Systems Committee (ATSC) data broadcasting, Application Information Table (AIT) of the DVB-Multimedia Home Platform (MHP), and System Information (SI) of the Digital Multimedia Broadcasting (DMB).

Example 8. The method as recited in example 7, wherein the kind of the downloadable data is determined based on the data identification information in the step b).

Example 9. The method as recited in example 5, wherein the kind of the downloadable data includes a middleware module for accessing to a mobile communication terminal and a middleware plug-in.

Example 10. The method as recited in example 9, wherein the step c) includes the steps of:
c1) upgrading the software by using the middleware module; and
c2) upgrading the software by using the middleware plug-in.

Example 11. The method as recited in example 10, wherein the step c) includes the steps of:
c3) determining whether the version of the downloaded middleware module is the same as the version of the pre-established middleware version; and
c4) setting up the downloaded middleware module, if the version of the downloaded middleware module is not the same as the version of the pre-established middleware version.

Example 12. The method as recited in example 11, wherein the step c) includes the steps of:
c5) suspending an application in execution temporarily; and
c6) executing the temporarily suspended application after the setup of the middleware module.

Example 13. The method as recited in example 10, wherein the step c2) includes the steps of:
c2-1) checking whether the Multipurpose Internet Mail Extensions (MIME) format of the downloaded middleware plug-in is registered;
c2-2) if the format of the downloaded middleware plug- in is new, registering the format of the downloaded middleware plug-in; and
c2-3) setting up the downloaded middleware plug-in.

Example 14. The method as recited in example 5, further comprising the step of:
d) receiving and processing a request for accessing to a mobile communication network from the user.

Example 15. The method as recited in example 14, wherein the step d) includes the steps of:
d1) checking whether the downloadable data include a module capable of accessing to a mobile terminal;
d2) if the access to the mobile terminal is possible, checking whether the request for accessing to the mobile communication network from the user can be executed; and
d3) if the request for accessing to the mobile communication network from the user can be executed, accessing to the mobile communication network by executing user authentication and a mobile terminal accessing program.

Example 16. The method as recited in example 15, wherein whether the request for accessing to the mobile communication network from the user can be executed is determined based on module information of the mobile terminal of the user or communication company information.

Example 17. A data broadcast receiving apparatus supporting an interactive service, comprising:
a demultiplexing means for dividing signals from the outside into signals of a kind;
a controlling means for controlling elements of the data broadcast receiving apparatus, receiving and outputting contents divided in the demultiplexing means;
a download processing means for receiving downloadable data divided in the demultiplexing means, determining the kind of the downloadable data, and performing upgrade by downloading the downloadable data; and
a mobile terminal accessing means for accessing to a mobile communication network based on the downloadable data.

## Claims

1. A method for receiving downloadable data in a data broadcast receiving apparatus, comprising the steps of:
determining whether there is a downloadable data information descriptor in broadcast stream which is received through broadcast channel and includes the downloadable data;
extracting downloadable data identification from the downloadable data information descriptor;
determining the kind of the downloadable data based on the extracted downloadable data identification; and
upgrading predetermined data in the data broadcast receiving apparatus using the downloadable data according to the kind of the downloadable data.

2. The method as recited in claim 1, wherein the downloadable data information descriptor is transmitted through at least one among Program Specific Information (PSI) of the Moving Picture Experts Group (MPEG)-2 system, Data Service Table (DST) of the Advanced Television Systems Committee (ATSC) data broadcasting, Application Information Table (AIT) of the DVB-Multimedia Home Platform (MHP), and System Information (SI) of the Digital Multimedia Broadcasting (DMB).

3. The method as recited in claim 1, wherein the kind of the downloadable data includes a middleware module for accessing a mobile terminal and a middleware plug-in.

4. The method as recited in claim 1, wherein said upgrading predetermined data in the data broadcast receiving apparatus using the downloadable data includes the steps of:
determining whether a version of the downloadable data is the same as a version of the predetermined data in the data broadcast receiving apparatus; and
setting up the downloadable data if the version of the downloadable data is not the same as the version of the predetermined data in the data broadcast receiving apparatus.

5. The method as recited in claim 3, wherein said upgrading predetermined data in the data broadcast receiving apparatus using the downloadable data includes the steps of:
checking whether a Multipurpose Internet Mail Extensions (MIME) format of the downloadable data is registered if the kind of the downloadable data is the middleware plug-in;
registering the MIME format of the downloadable data if the MIME format of the downloadable data is not registered; and
setting up the downloadable data.

6. The method as recited in claim 1, further comprising the steps of:
checking whether the downloadable data includes a module capable of accessing a mobile terminal; and
accessing the mobile terminal using the downloadable data if the downloadable data includes the module capable of accessing the mobile terminal.

7. The method as recited in claim 6, further comprising the step of:
transmitting and receiving interactive data through a mobile communication network connected with the mobile terminal using the mobile terminal.

8. The method as recited in claim 6, wherein said checking whether the downloadable data includes a module capable of accessing a mobile terminal checks whether the downloadable data includes a module capable of executing an access to the mobile terminal, the access to the mobile terminal being requested from user.

9. The method as recited in claim 6, wherein said accessing the mobile terminal using the downloadable data includes the step of:
executing user authentication using the downloadable data.

10. A data broadcast receiving apparatus for receiving downloadable data, comprising:
a demultiplexing component to demultiplex broadcast stream which is received through broadcast channel and includes the downloadable data;
a download processing component to determine whether there is a downloadable data information descriptor in the broadcast stream demultiplexed in the demultiplexing component and to determine the kind of the downloadable data based on downloadable data identification extracted from the downloadable data information descriptor; and
a processing component to upgrade predetermined data using the downloadable data according to the kind of the downloadable data determined in the download processing component.

11. The data broadcast receiving apparatus as recited in claim 10, wherein the downloadable data information descriptor is transmitted through at least one among Program Specific Information (PSI) of the Moving Picture Experts Group (MPEG)-2 system, Data Service Table (DST) of the Advanced Television Systems Committee (ATSC) data broadcasting, Application Information Table (AIT) of the DVB-Multimedia Home Platform (MHP), and System Information (SI) of the Digital Multimedia Broadcasting (DMB).

12. The data broadcast receiving apparatus as recited in claim 10, wherein the kind of the downloadable data includes a middleware module for accessing a mobile terminal and a middleware plug-in.

13. The data broadcast receiving apparatus as recited in claim 10, wherein the processing component sets up the downloadable data if a version of the downloadable data is not the same as a version of the predetermined data.

14. The data broadcast receiving apparatus as recited in claim 12, wherein the processing component checks whether a Multipurpose Internet Mail Extensions (MIME) format of the downloadable data is registered if the kind of the downloadable data is the middleware plug-in, registers the MIME format of the downloadable data if the MIME format of the downloadable data is not registered, and sets up the downloadable data.

15. The data broadcast receiving apparatus as recited in claim 10, further comprising a component for performing the method as defined in one of claims 7 to 9.
